Europäisches Patentamt

European Patent Office

Office européen des brevets

(19)

(11) Numéro de publication : **0 068 977**

**B1**

(12)

# FASCICULE DE BREVET EUROPÉEN

(45) Date de publication du fascicule du brevet :
05.09.84

(21) Numéro de dépôt : **82401094.6**

(22) Date de dépôt : **16.06.82**

(51) Int. Cl.³ : **H 04 L 25/48**

(54) **Procédé de transmission de messages entre modules émetteurs récepteurs autonomes possédant des horloges et des dispositifs de synchronisation internes indépendants.**

(30) Priorité : **19.06.81 FR 8112130**

(43) Date de publication de la demande :
**05.01.83 Bulletin 83/01**

(45) Mention de la délivrance du brevet :
**05.09.84 Bulletin 84/36**

(84) Etats contractants désignés :
**DE GB IT**

(56) Documents cités :
**DE-A- 2 849 060**
**FR-A- 1 188 034**
**US-A- 4 327 441**
**ELEKTRONIK, vol. 27, no. 8, août 1978, pages 85-96, Munich, DE., O. FEGER: "Impulspausen-Demodulation mit Mikrocomputer"**
**ELECTRONICS INTERNATIONAL, vol. 53, no. 19, août 1980, pages 74-76, New York, USA, K. SMITH: "Coax car system replaces harness"**

(73) Titulaire : **AUTOMOBILES PEUGEOT**
**75, avenue de la Grande Armée**
**F-75116 Paris (FR)**

**AUTOMOBILES CITROEN**
**117-167 Quai André Citroën**
**F-75747 Paris Cedex 15 (FR)**

(72) Inventeur : **Gonzalez Alvarez-Campana, Manuel**
**8 Rue sur le Bief**
**F-25600 Vieux-Charmont (FR)**

(74) Mandataire : **Bressand, Georges et al**
**c/o CABINET LAVOIX 2 Place d'Estienne d'Orves**
**F-75441 Paris Cedex 09 (FR)**

Jouve, 18, rue St-Denis, 75001 Paris, France

## Description

L'invention concerne un procédé de transmission de messages sous forme codée binaire, en mode série asynchrone entre modules émetteurs récepteurs autonomes possédant des horloges et des dispositifs de synchronisation internes indépendants, les modules étant reliés entre eux par une seule ligne de transmission.

L'invention s'applique particulièrement à l'utilisation de modules émetteurs-récepteurs programmés fonctionnant indépendamment les uns des autres, chaque module possédant son microprocesseur, son horloge et ses circuits annexes.

L'invention peut trouver application dans des domaines très divers tels que : la protection des locaux et enceintes, la gestion et la surveillance des consommateurs d'électricité et de leurs demandeurs pour permettre le cas échéant une économie substantielle d'énergie, la réalisation des fonctions électriques d'un véhicule automobile, etc.

L'exemple qui sera donné ci-après d'une réalisation préférée de l'invention sera orienté plus particulièrement à la réalisation des fonctions dites électriques d'un véhicule automobile.

La croissance de plus en plus grande des fonctions électriques introduites pour le fonctionnement des véhicules automobiles rend de plus en plus complexes les câblages électriques nécessaires à la réalisation de ces fonctions. Les problèmes liés à l'implantation et à la gestion des faisceaux électriques sont de plus en plus difficiles à résoudre. De plus en plus l'adjonction de ces nouvelles fonctions électriques fait appel à des réalisations électroniques mettant en œuvre des systèmes de contrôle augmentant par là, la complexité de ces dispositifs et, sur le plan économique ces solutions deviennent de plus en plus onéreuses. Par ailleurs, l'augmentation de la complexité des faisceaux électriques a pour conséquence une baisse de la fiabilité du système tout entier, puisque le nombre de connexions devient de plus en plus grand et que les pannes dues à de mauvais contacts électriques deviennent de plus en plus probables. La conséquence de cette évolution est un prix de revient des faisceaux traditionnels qui ne cesse de s'accroître.

Pour pallier ces inconvénients et obtenir une simplification des faisceaux plusieurs systèmes ont déjà été développés visant à utiliser, dans les systèmes de connexion des dispositifs électroniques des véhicules automobiles, la technique du multiplexage.

La solution de la technique du multiplexage met en œuvre généralement des unités centrales de traitement de l'information qui scrutent cycliquement les signaux de commande qui se présentent à leur entrée pour envoyer des ordres associés. Les unités centrales sont reliées à des unités périphériques par un ou plusieurs fils d'interconnexion permettant d'assurer l'échange des informations entre les deux types d'unités.

Les échanges d'informations entre les unités centrales et leurs unités périphériques mettent en œuvre différents modes de transmission, par discrimination d'amplitudes, discrimination de fréquences, comptage d'impulsions, discrimination par intervalles de temps ou discrimination par codage digital.

Seules les techniques utilisant la discrimination par intervalles de temps ou la discrimination par codage digital semblent les plus adaptées pour prémunir les dispositifs électroniques des perturbations causées par des parasites et elles présentent d'autre part de plus grandes possibilités pour coder les informations transmises. Aussi perfectionnée que soit la technique du multiplexage, elle présente toutefois quelques inconvénients parmi lesquels :

— la panne d'une unité centrale ou des unités centrales implique la panne des éléments périphériques associés qui leur sont raccordés ;

— le principe de scrutation cyclique implique une perte certaine d'énergie car les fils d'interconnexion sont constamment sollicités ;

— une synchronisation des unités centrales avec leurs unités périphériques doit être assurée pour une bonne transmission des informations transmises entre celles-ci.

Dans le DE-A-2 849 060, on décrit un réseau de transmission dans lequel pour obtenir une interprétation irréprochable du message transmis entre émetteur et récepteur, une impulsion d'une durée étalon est émise avant la transmission du message afin de tester la ligne de transmission et, dans le récepteur, la durée étalon affectée nécessairement des défauts temporels introduits par la ligne est conservée en mémoire.

Cet étalon modifié est alors comparé chaque fois avec les signaux reçus à la suite de l'émission des impulsions constituant le message. En utilisant dans le récepteur une même durée étalon, on peut obtenir dans ce récepteur la durée exacte de l'impulsion de message transmise en tenant compte des défauts temporels décelés au cours de la transmission de la durée étalon.

Ce procédé nécessite donc des générateurs de durée étalon exactement synchronisés dans l'émetteur et le récepteur, ou au moins très stables.

L'invention a pour but de fournir un procédé au moyen duquel les informations entre les modules peuvent être échangées d'une façon entièrement asynchrone sans qu'il soit nécessaire de disposer dans l'émetteur et dans le récepteur de durées étalon égales.

Pour atteindre ces objectifs, l'invention a pour objet un procédé de transmission de messages sous forme codée binaire, en mode série asynchrone, entre au moins un module émetteur-récepteur et des modules émetteurs et/ou récepteurs autonomes qui sont reliés entre eux par une seule ligne de transmission, la représentation de la suite des chiffres binaires 0 ou 1 des messages se faisant par application sur la ligne de transmission d'une suite de signaux Z et U correspondant chacun respectivement à un chiffre binaire 0 ou 1 du message transmis, chaque signal Z ou U ayant une durée déterminée fonction du chiffre 0 ou 1 transmis, la reconnaissance par le récepteur de la suite 0 ou 1 du message transmis étant réalisée par mesure de la durée des signaux reçus Z ou U à l'aide de la durée d'un signal étalon E transmis en même temps que le message par l'émetteur, caractérisé en ce que lesdits modules possèdent tous des horloges et des dispositifs de synchronisation internes indépendants et en ce que le décodage du message reçu par le récepteur s'effectue par celui-ci par division de la durée de chaque signal reçu (Z, U) par la durée du signal étalon reçu, mesurées chacune en fonction du temps de cycle de l'horloge interne dudit récepteur.

Selon une autre caractéristique de l'invention, les durées du signal étalon E et des signaux Z ou U correspondant au codage du message reçu par un récepteur sont mesurées par celui-ci en fonction du temps de cycle de l'horloge interne qui lui est propre.

Le procédé selon l'invention permet d'obtenir plusieurs avantages que ne confèrent pas les divers procédés de transmission de messages de l'art antérieur, y compris celui décrit dans le brevet allemand précité. En particulier, il présente une plus grande immunité aux parasites, il est insensible aux variations de température, il présente de plus grandes commodités d'implantation des modules dans le système d'alimentation électrique des véhicules automobiles puisqu'il suffit de connecter le nouveau module à n'importe quel endroit de la ligne de transmission. En supprimant l'unité centrale chaque module devient indépendant ce qui a pour conséquence d'augmenter la fiabilité du système. Le fil d'interconnexion unique de tous les modules supprime les difficultés de câblage rencontrées dans les dispositifs de l'art antérieur. Le nombre des modules n'est pas limité, rendant encore possible une croissance plus grande des fonctions électriques et électroniques des véhicules automobiles. L'indépendance des horloges des modules entre elles supprime le dispositif de synchronisation utilisé par l'art antérieur. L'utilisation de microprocesseurs au niveau de chaque module permet le contrôle et la signalisation des défauts, par mise en œuvre de microprogrammes de diagnostic spécifiques dans chaque module, pour faciliter les tests de bon fonctionnement des véhicules par les services après vente ou pour signaler au conducteur l'état de fonctionnement de son véhicule. Le procédé de transmission adopté par l'invention a pour autre avantage une plus grande rapidité de transmission qui peut atteindre facilement 50 messages par seconde.

D'autres caractéristiques et avantages de l'invention apparaîtront mieux à l'aide de la description faite en regard des dessins qui va suivre :

la Figure 1 est une représentation simplifiée du système de transmission série asynchrone entre deux modules émetteurs-récepteurs ;

la Figure 2 est un diagramme de temps représentant la composition d'un message ;

la Figure 3 illustre sous forme de diagramme de temps le principe de priorité et de désistement utilisé dans l'invention ;

la Figure 4 est une représentation synoptique d'une installation à bord d'un véhicule ;

la Figure 5 représente l'unité de base émettrice et/ou réceptrice commune à tous les modules ;

la Figure 6 représente une variante de réalisation de l'unité de base émettrice et/ou réceptrice ;

les Figures 7 à 9 représentent des organigrammes illustrant le fonctionnement d'un module émetteur ;

les Figures 10 et 11 représentent des organigrammes illustrant le fonctionnement d'un module récepteur.

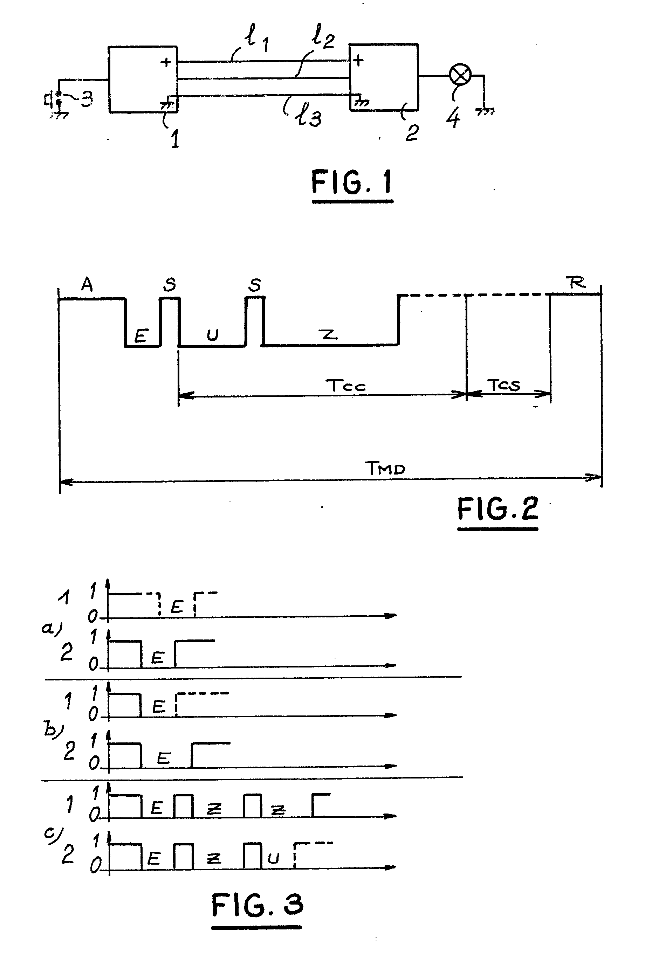

Le procédé de l'invention utilise au moins deux modules 1 et 2 représentés sur la Fig. 1. Ces modules sont reliés entre eux par une première ligne 11 d'alimentation, une deuxième ligne 12 réalisant le transport des informations d'une façon bidirectionnelle entre les modules et d'une ligne 13 assurant le retour des courants d'alimentation et des courants de transmission circulant à l'intérieur des deux modules.

Sur la Fig. 1 l'ensemble des modules 1 et 2 et le contact 3 assurent l'alimentation de la lampe 4. Lorsque le module 1 décèle un changement d'état du contact 3, ce module envoie un message sur la ligne de transmission 12. Ce message a la forme représentée à la Fig. 2. Le message comprend les parties suivantes, exprimées en fonction des paramètres (a, e, s, u, z, r) et du temps t :

$$A = a \times t$$
$$t = \text{unité de temps}$$
$$E = e \times t$$
$$S = s \times t$$
$$U = u \times r$$
$$Z = q \times E$$
$$Z = z \times t$$
$$U = p \times E, \text{ p étant différent de q.}$$
$$R = r \times t$$

Les parties A, E, S, Z, U et R du message représentées sur la Fig. 2 ont les significations suivantes :

A correspond à une durée appelée « attente » pendant laquelle la ligne de transmission est en attente, donc présente un état 1 logique pour l'ensemble des modules. Pendant la période A, la ligne de transmission doit rester dans l'état 1 pour s'assurer qu'il n'y a pas de transmission en cours. Les modules doivent attendre la présence du signal A au moins avant d'envoyer leur message.

Pour envoyer un message, le module doit attendre que la ligne de transmission soit libre. Il faut considérer que la ligne de transmission est libre lorsqu'elle est restée à l'état 1 logique pendant la durée du signal A.

Le signal E apparaît après que la durée du signal A s'est écoulée, le module du demandeur faisant passer l'état de la ligne de transmission à l'état logique 0. La durée pendant laquelle le signal E reste à zéro s'appelle la durée « étalon ». Le laps de temps de durée Z est appelé « ZERO ».

Le laps de temps de durée U est appelé « UN ».

Le signal S apparaît après l'envoi du signal étalon, ou après les laps de temps Z et U pendant lesquels la ligne de transmission est mise à l'état 0 logique, de façon à séparer entre eux les signaux Z et U et le signal étalon. Le signal S est appelé signal « séparateur ». Le signal S sépare donc les signaux d'information. Pendant la présence du signal S la ligne de transmission est au niveau 1 logique.

R est le signal d'attente-réponse qui est émis par le demandeur après l'émission de son message pendant un laps de temps R. Pendant ce laps de temps, l'exécutant devra répondre en envoyant son code réponse avant la fin du signal R. Si le code de réponse ne débute pas avant la fin du signal R, le demandeur répètera le message autant de fois qu'il le souhaitera, en prenant soin de ne pas mobiliser la ligne de transmission trop longtemps. Il sera possible par exemple de faire décroître la durée A par programmation en fonction du nombre de répétitions. Les durées des signaux A, R, S devront être définies de façon que la durée du signal A soit supérieure à la durée du signal R et bien supérieure à la durée du signal S. A devra être supérieur au signal R pour éviter que le module interprète une disponibilité de la ligne de transmission, alors que cette ligne est à l'état 1 logique dans la phase R où le module attend une réponse. Le signal R doit être égal à nx, x étant le temps nécessaire pour le module le plus lent pour exécuter les opérations qu'il a à faire. La durée des signaux E et S s'est définie en fonction des caractéristiques de l'application dans laquelle l'invention est réalisée, elle dépend aussi de la technologie utilisée.

L'échange d'informations entre module demandeurs et modules exécutants est exécuté de la façon suivante.

En premier lieu le demandeur envoie son message et l'exécutant répond, en lui adressant son code réponse avant l'écoulement de la durée du signal R. Généralement, le message est constitué par au moins deux zones, une première zone correspond au code de « commande » et une deuxième zone correspond au code de « consigne ». Le nombre de digits d'information de chaque zone est déterminé par le nombre de codes de « commande » que l'on souhaite utiliser dans le système, et par la protection que l'on souhaite avoir dans ce système. En utilisant 8 digits pour la zone code de commande, on pourra utiliser jusqu'à 256 codes différents. On pourra aussi suivant la nature des dispositifs de contrôle utilisés, procéder à des répétitions de codes ou passer tout simplement par un système de contrôle de parité. Le code « commande » caractérise un élément ou une fonction, le code « consigne » indique l'action à exécuter.

Le module exécutant surveille en permanence les modifications d'état intervenant sur la ligne de transmission. De par le principe même du système de l'invention, le module exécutant possède une horloge qui lui est propre et dont les temps de cycles peuvent différer des temps de cycles de l'horloge du module demandeur. Il en résulte que les signaux du message reçu par l'exécutant peuvent présenter des caractéristiques en durée E', U', Z', S' différentes de celles des signaux E, U, Z, S émis par le module demandeur. Selon la caractéristique principale de l'invention, le décodage des signaux ainsi reçus par l'exécutant est effectué en divisant chaque période U' et Z' du signal reçu par la période du signal étalon E' également reçu par le module de l'exécutant. Le décodage des signaux U et Z du message reçu par le module exécutant s'effectuera donc par contrôle de la proportionnalité des signaux reçus U'/E' et Z'/E'. Ceci naturellement affranchit le système de tous dispositifs de synchronisation nécessitant l'utilisation d'une horloge centrale.

Une fois le message reçu, l'exécutant envoie sur la ligne de transmission un message de réponse, avant ou après l'exécution de la consigne avec ou sans contrôle de la bonne exécution. Ce message de réponse se transmettra selon.une succession de signaux U et de signaux Z séparés par des intervalles S. Le début de l'envoi du message de réponse intervient avant la fin de la durée du signal R. En cas de défaut dans l'exécution de la consigne ou du défaut d'un élément du module exécutant, l'exécutant peut envoyer un message vers un autre module chargé d'exploiter cette anomalie ou encore peut intégrer dans le code de réponse cette information d'anomalie. L'exécutant ne répondra pas s'il ne comprend pas le code envoyé par le module demandeur 2. Cette absence de réponse peut déclencher la répétition de la demande. Dans ce cas, il est toujours possible de limiter par programmation le nombre des répétitions ainsi que leurs cadences. L'anomalie pourra être signalée par le module demandeur localement ou par l'envoi d'un message vers un autre module. Le décodage adopté par la présente invention permet une très grande souplesse dans les tolérances des horloges. Ces tolérances peuvent être très larges dans un rapport de 1 à 2, permettant ainsi l'utilisation d'oscillateurs économiques. Lorsque ces tolérances sont choisies il suffit de choisir les durées A, S, Z, E, U, R adaptées et les rapports U/E, Z/E et A/R adaptés. On pourra en outre par programmation choisir de compter pour bons les signaux U et Z lorsque U est compris entre 1,5.E et 2,5.E et Z est compris entre 3,5.E et 4,5.E pour des valeurs nominales de U et de Z respectives de 2 et 4. En dehors de ces fenêtres, la transmission est mauvaise et le système devra se mettre en attente. L'exécutant passant en attente d'un nouveau message. L'exemple de fonctionnement de deux modules peut être étendu à l'utilisation de n modules.

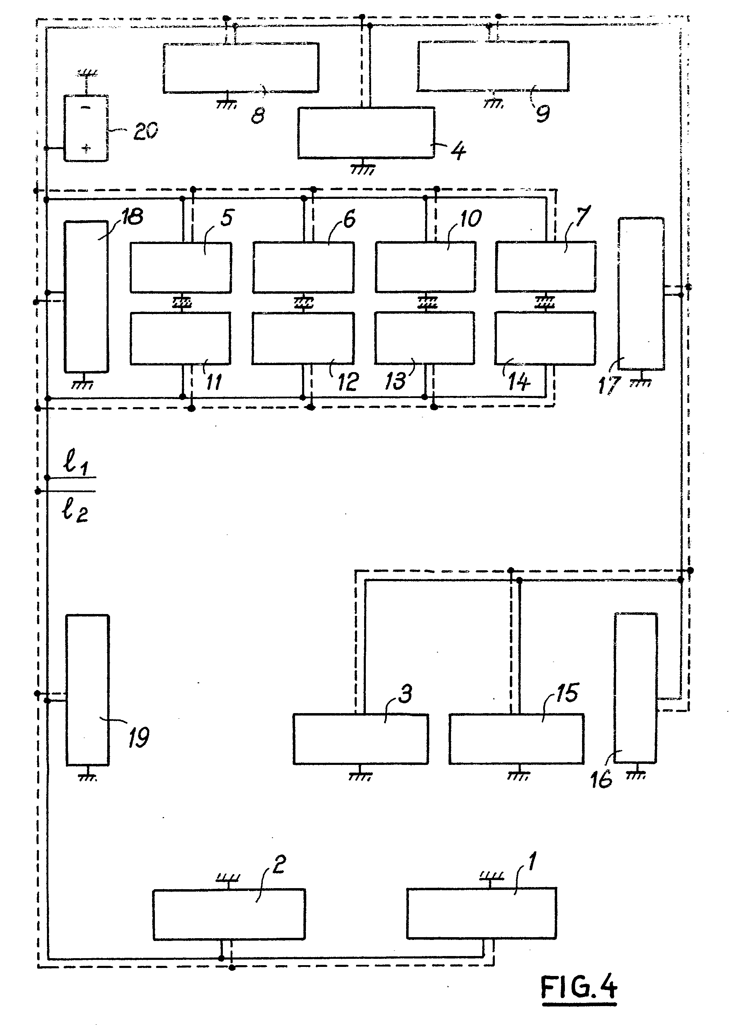

La Fig. 4 représente un synoptique d'une installation à bord d'un véhicule automobile. Cette Figure représente les différents modules installés à bord du véhicule, ces modules étant alimentés par un fil les reliant au pôle positif de la batterie du véhicule et étant en communication les uns avec les autres par un fil de transmission qui transmet les différents messages entre les modules. Un troisième fil assure la continuité de la masse. Différentes affectations sont naturellement données à ces modules, par exemple, l'éclairage du feu de recul, du feu de position, du clignotant, du stop et du feu de brouillard placés sur les parties arrière droite et gauche du véhicule sera assuré par les modules 1 et 2 respectivement, le module 3 aura pour fonction d'assurer le chauffage de la lunette arrière, l'éclairage de la plaque de police, l'essuie-vitre arrière et la commande de la pompe lave-vitre, le module 4 assurera la commande de l'essuie-vitre et de la pompe lave-vitre, les modules 5 et 6 seront chargés de l'affichage des informations sur la planche de bord, le module 7 assurera la commande du récepteur de jauge, le module 8 assurera les commandes de signalisation de la partie avant gauche du véhicule, en phares, codes, position et clignotants ainsi que la commande de l'avertisseur, le module 9 assurera la commande de signalisation de la partie avant droite du véhicule en phares, codes, position et clignotants, le module 10 jouera le rôle de module d'erreur et aura pour fonction l'affichage et la localisation des défauts pouvant intervenir dans le fonctionnement du véhicule, le module 11 et le module 12 seront des émetteurs commandés par des dispositifs de commande disposés sous le volant, les modules 13 et 14 seront des émetteurs d'information à destination d'une console, le module 15 renfermera l'émetteur de commande de jauge, les modules 16 à 19 assureront la condamnation ou l'éclairage des voyants d'ouverture des portes arrière droite et gauche ou avant droite et gauche du véhicule.

Dans le cas d'une configuration de modules telle que celle représentée à la Fig. 4, plusieurs conflits de priorité pourraient avoir lieu entre modules. Le dispositif selon l'invention permet d'éviter ces conflits par un système de priorité et de désistement reposant d'une part, sur le délai A d'attente-émission et d'autre part, sur le fait que chaque émetteur est programmé pour effectuer des tests de l'état de la ligne de transmission en fonction du rythme de sa propre horloge et que si un émetteur détecte lors d'un de ces tests un deuxième état de la ligne (état 0) alors qu'il a commandé un premier état (état 1), cet émetteur interrompt son signal d'attente-émission ou la transmission de son message et se remet en attente de disponibilité de la ligne en comptant à partir de 0 le délai A. Ce nouveau compte pourra s'effectuer dès que la ligne sera revenue dans son premier état après ou non une temporisation. Dans ce cas il peut être avantageux de raccourcir le délai A pour le module considéré. De préférence l'état 1 correspond à une mise sous tension de la ligne de transmission et l'état 0 à sa mise en court-circuit.

Les cas de conflit possible ainsi évités sont représentés à la Fig. 3. Dans le cas a), le module 1 n'a pas terminé son délai A d'attente-émission lorsque le module 2 prend la ligne et la met à l'état 0 pour émettre son signal étalon E. Le module 1 testant un état 0 alors qu'il a commandé un état 1 se désiste en se remettant en attente. Dans le cas b) les deux modules prennent la ligne simultanément mais l'horloge du module 1 est plus rapide que celle du module 2. A la fin de l'émission de son signal étalon E le module 1 commande l'état 1 mais la ligne étant maintenue à l'état 0 par la durée plus longue du signal étalon du module 2, le module 1 se désiste et se remet en attente. Dans le cas c) les deux modules prennent la ligne en même temps et leurs horloges sont identiques et synchrones. Dès que l'un des modules émet un signal U, plus court que le signal Z, alors que l'autre module émet un signal Z, il teste la ligne à l'état 0 alors qu'il la commande à l'état 1 et donc interrompt l'émission de son message et se remet en cycle d'attente. De cette façon un ordre de priorité est réalisé par la nature du code message placé à la suite du signal étalon et dans tous les cas une priorité est assurée lorsqu'il y a simultanéité au moment de l'envoi d'un message.

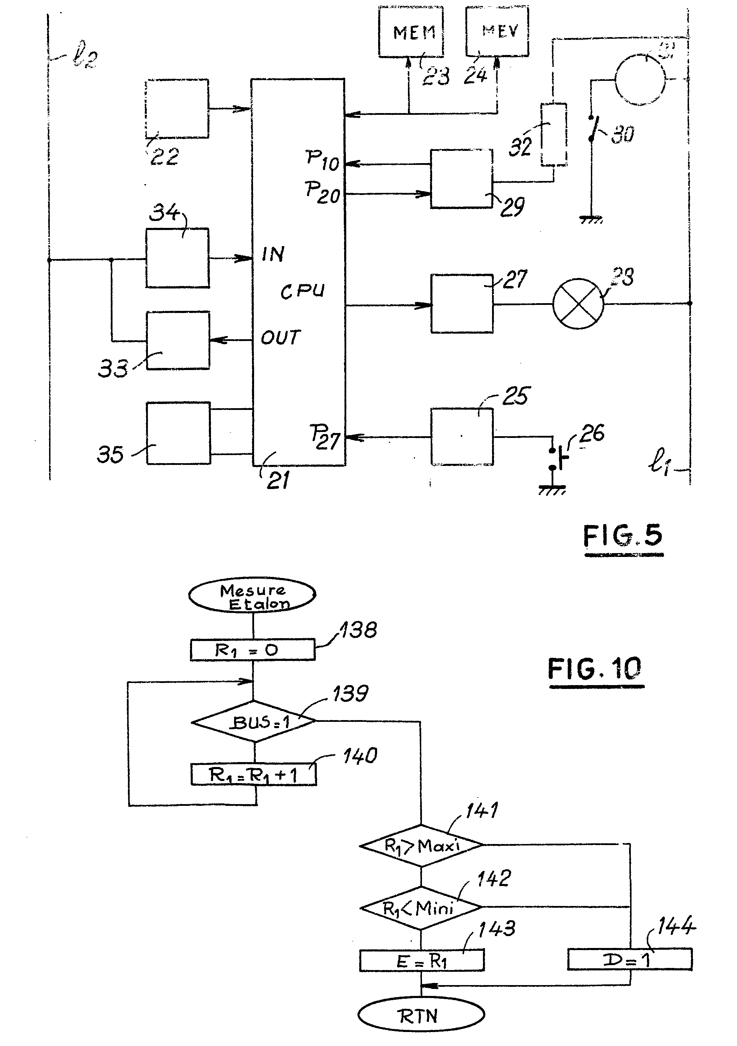

La Fig. 5 représente l'unité de base émettrice et/ou réceptrice commune à tous les modules. Cette unité comporte un microprocesseur 21 muni d'une horloge 22. Le microprocesseur 21 est relié à une mémoire morte 23 contenant son programme et à une mémoire vive 24. Les portes d'entrée-sortie du microprocesseur peuvent être reliés à des interfaces de trois types : des interfaces d'entrée tels que 25, des interfaces de sortie tels que 27 et des interfaces d'entrée-sortie tels que 29. Pour simplifier la Figure on n'a représenté qu'un seul interface de chaque type. Un interface d'entrée 25 est relié à un bouton poussoir de commande 26. Un interface de sortie 27 assure par exemple la commande d'une lampe 28. Un interface d'entrée-sortie 29 assure par exemple la commande du moteur d'essuie-glace 31 au travers d'un relais 32 et de son contact 30 et donne en retour une information sur le bon fonctionnement de l'organe commandé. Selon les fonctions attribuées au module celui-ci pourra comporter un seul type de ces interfaces ou une combinaison de deux de ces types ou des trois. Le microprocesseur 21 est connecté à la ligne de transmission $1_2$ par un interface d'émission 33 et un interface de réception 34. L'interface 33 assure la transmission des données venant de la ligne de transmission vers l'entrée IN du microprocesseur. L'interface 34 assure la transmission des données sortant de la ligne OUT du microprocesseur vers la ligne de transmission $1_2$. En d'autres termes, les interfaces 33 et 34 assurent la transmission des informations entre la ligne de transmission $1_2$ et le microprocesseur 21 suivant un mode de transmission série bidirectionnel. L'alimentation 35 alimente le microprocesseur à partir de la batterie du véhicule, elle est réalisée de façon connue.

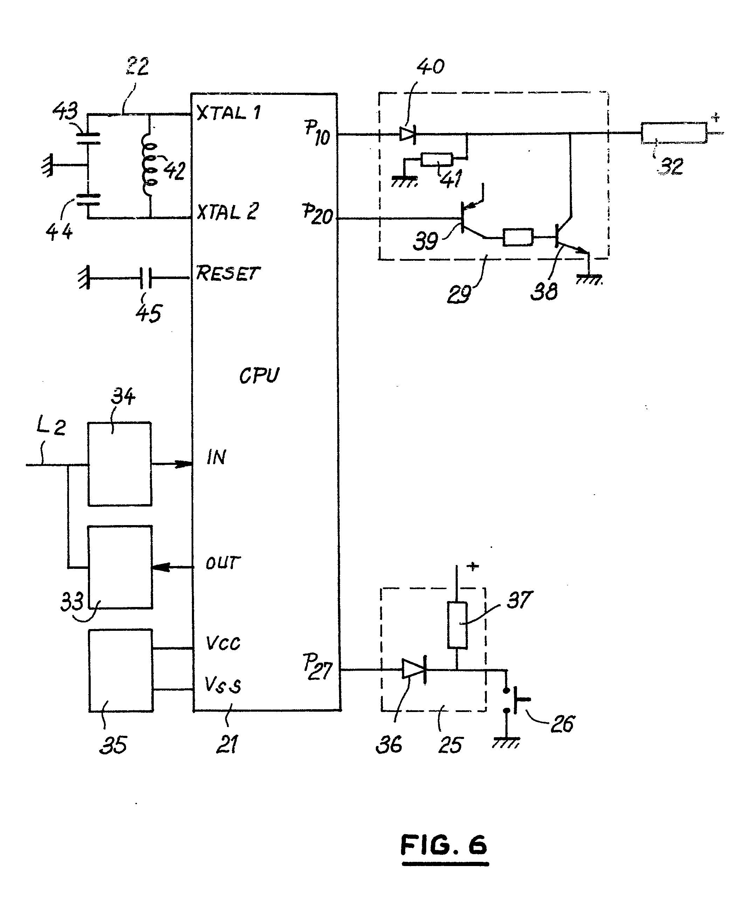

La réalisation des microprocesseurs 21 ne fait pas de difficulté ; ils se composent d'une partie calcul, d'une partie registres de travail Ro à Rn et peuvent contenir intégrées ou non sur un même substrat la mémoire vive et la mémoire morte. Dans ce dernier cas représenté en Figure 6 on pourra utiliser, par exemple, les microprocesseurs 8048 ou similaires fabriqués par la Société INTEL. Les interfaces d'entrée et/ou sortie des types 25, 27 et 29 sont connectés sur les portes d'entrée-sortie P 10 à P 27. Les interfaces d'entrée 25 sont constitués chacun par une diode 36 polarisée par une résistance 37. Les interfaces d'entrée-sortie 29 sont constitués chacun par un transistor 38 dont l'émetteur est à la masse et qui est commandé sur sa base par un autre transistor 39 dont la base est reliée à une porte P 20 du microprocesseur 21.

Le collecteur du transistor 38 est connecté, d'une part, à la bobine du relais 32 et, d'autre part, à la porte P 10 du microprocesseur 21 par l'intermédiaire d'une diode 40 polarisée par la résistance 41. Le fonctionnement de l'interface 29 est le suivant. Le relais 32 est commandé par l'état 0 de la porte P 20, rendant passant le transistor 38, ce qui a pour conséquence, si le fonctionnement est normal, la recopie de cet état 0 sur la Porte P 10 du microprocesseur. Le relais 32 n'est plus commandé lorsque la porte P 20 du microprocesseur prend l'état 1, bloquant ainsi le transistor 38, ce qui entraine pour conséquence, si le fonctionnement est normal, la recopie de l'état 1 ainsi présenté sur la porte P 10 du microprocesseur.

Deux cas de mauvais fonctionnement peuvent être détectés par discordance de l'état commandé par la porte P 20 et de l'état lu sur la porte P 10. Si le relais 32 est en court-circuit le microprocesseur lira un état 1 sur la porte en P 10 lorsqu'un état 0 est commandé sur la porte P 20. Si le relais 32 est coupé, le microporcesseur lira un état 0 sur la porte P 10 lorsqu'un état 1 est commandé sur la porte P 20. Des tests effectués par le microprocesseur sur la concordance des états des portes P 10 et P 20 permettront d'élaborer un signal qui pourra être utilisé pour transmettre un message au module d'erreur 10 dont la fonction est l'affichage et la localisation des défauts. Un interface de sortie du type 27 représenté en Fig. 5 ne comporterait qu'une porte de sortie du type P 20 et ne permettrait pas de délivrer d'information sur le bon fonctionnement de l'organe récepteur.

L'horloge 22 peut, de par les caractéristiques de l'invention, être avantageusement constituée d'un simple circuit oscillant comportant une bobine d'induction 42 et les condensateurs 43 et 44. Les signaux d'horloge sont délivrés aux entrées XTAL1 et XTAL2 du microprocesseur. Enfin, un condensateur 45 est appliqué sur l'entrée RESET du microprocesseur 21 pour assurer la remise à zéro de tous les registres lors de la mise sous tension.

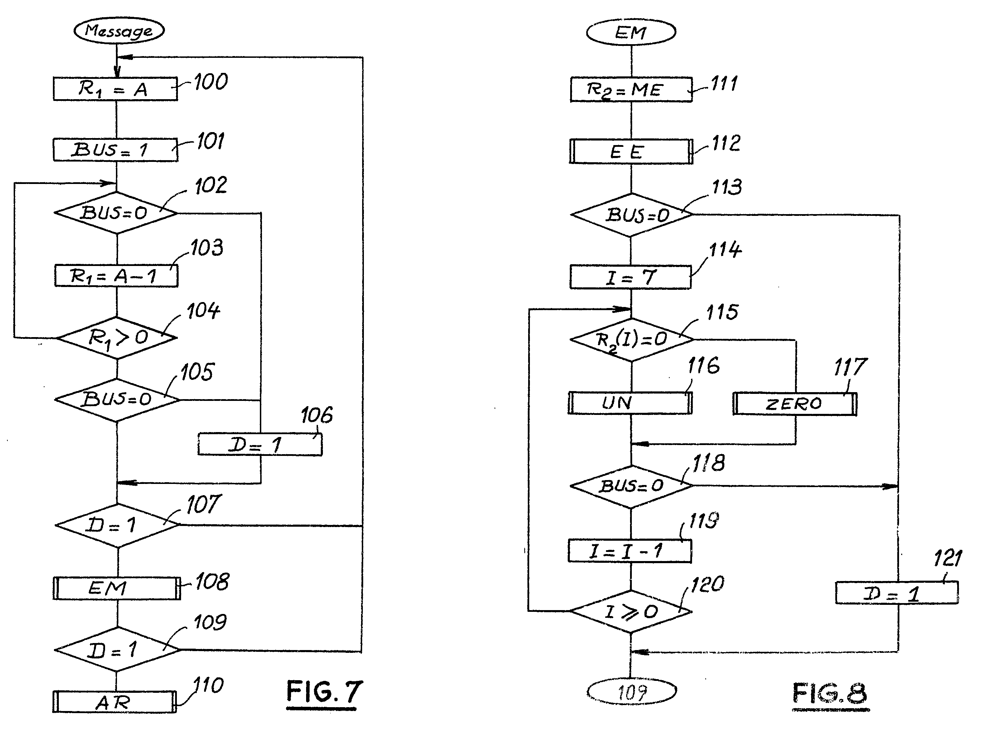

Le fonctionnement du dispositif d'échange d'informations entre modules s'effectue à l'aide des dispositifs matériels représentés aux Fig. 5 et 6 et des microprogrammes enregistrés dans la mémoire morte des microprocesseurs 21. On va maintenant décrire les organigrammes de ces microprogrammes spécifiques à la réalisation d'un procédé de transmission de messages selon l'invention. On exposera d'abord le fonctionnement d'un module émetteur à l'aide des organigrammes représentés aux Fig. 7 à 9.

Le microprocesseur lit de façon permanente à intervalles réguliers l'état des boutons tel que 26 et compare chaque lecture à la lecture précédente mémorisée. En fonction de cette comparaison il élabore des messages codés binaires correspondants qu'il mémorise dans sa mémoire vive avant de les transmettre sur la ligne de transmission. Lorsqu'il a un message à envoyer, le microprocesseur exécute la procédure « message » correspondant à l'organigramme de la figure 7. A l'étape 100 un registre $R_1$ interne au microprocesseur est chargé de la valeur A représentant la durée du signal attente-émission. Pour la commodité de lecture les états de la ligne de transmission ont été représentés par les expressions BUS = 1 et BUS = 0. A l'étape 101 le microprocesseur place sa sortie connectée à la ligne $l_2$ à l'état 1, puis il entre dans une boucle de décomptage représentée en 102, 103 et 104. A chaque exécution de la boucle le contenu du registre $R_1$ est diminué d'une unité (étape 103) et l'état de la ligne est testé (étape 102). On voit donc selon ce principe que la durée du signal A correspond à un nombre de boucles déterminé ; chaque boucle représentant un nombre fini de cycles du microprocesseur et déterminé en fonction des opérations à effectuer. A la fin du délai A, matérialisé par le signal d'attente-émission, le contenu du registre $R_1$ est nul et le microprocesseur teste la ligne de transmission à l'étape 105. Si un état 0 de la ligne est testé aux étapes 102 ou 105, un registre D de défaut ou d'erreur du microprocesseur est chargé à la valeur 1 à l'étape 106. On notera que suivant la convention habituelle les sorties horizontales des étapes correspondant à un test conditionnel correspondent à un résultat logique 1.

Si à l'étape 107 le registre D n'indique pas un défaut le microprocesseur appelle la procédure EM d'envoi de message représentée par l'organigramme de la Figure 8. Lorsque la procédure EM est terminée, le registre D est à nouveau testé à l'étape 109. S'il n'y a pas de défaut, le microprocesseur appelle une procédure AR d'attente-réponse. Cette procédure est semblable à celle décrite entre les étapes 100 à 107 de la « procédure message » à la différence que le registre $R_1$ est chargé à une valeur R représentant la durée du signal d'attente-réponse R exprimée comme précédemment en nombre de boucles. Si au cours du décomptage de la durée R, la ligne passe à l'état 0, le microprocesseur devra se mettre à l'écoute du message réponse selon une procédure analogue à celle qui sera décrite pour la réception des messages. Dans le cas où le microprocesseur ne recevrait pas de réponse pendant la durée R ou si cette réponse s'avère défectueuse, le microprocesseur relance la procédure message à partir de l'étape 100, où le registre $R_1$ est chargé à nouveau à une valeur A' représentant une durée du signal d'attente émission qui peut être choisie plus courte que la valeur A initiale pour donner la priorité au microprocesseur qui relance ainsi sa procédure d'émission.

Dans la procédure « envoi de message EM » dont l'organigramme est représenté à la Figure 8 il est supposé, à titre d'exemple, que le format du message a une longueur de 8 bits. A l'étape 111 le message à envoyer est transféré de son emplacement en mémoire vive dans un registre $R_2$ du microprocesseur. La procédure étalon symbolisée par EE est exécutée à l'étape 112 et lorsqu'elle est terminée la ligne de transmission est testée à l'étape 113. S'il n'y a ni défaut ni désistement, un registre $R_3$ est chargé à la valeur I = 7 à l'étape 114. L'état du bit $R_2(I)$ de rang I du message contenu dans le registre $R_2$ est testé à l'étape 115. Selon le résultat de ce test des procédures « UN » ou « ZERO » sont exécutées aux étapes 116 ou 117. Lorsque l'exécution de ces procédures est terminée l'état de la ligne de transmission est à nouveau testé à l'étape 118. S'il n'y a ni défaut ni désistement le contenu du registre $R_3$ est diminué d'une unité à l'étape 119 pour passer au contrôle du bit suivant du registre $R_2$.

Le contenu du registre $R_3$ est testé à l'étape 120 chaque fois que son contenu est diminué d'une unité. Lorsque son contenu devient nul, le dernier bit du registre $R_2$ étant testé, le microprocesseur retourne à l'exécution de l'étape 109 de la procédure message de la Figure 7.

Si un défaut ou un désistement est testé aux étapes 113 ou 118 le registre de défaut D est mis à 1 à l'étape 121.

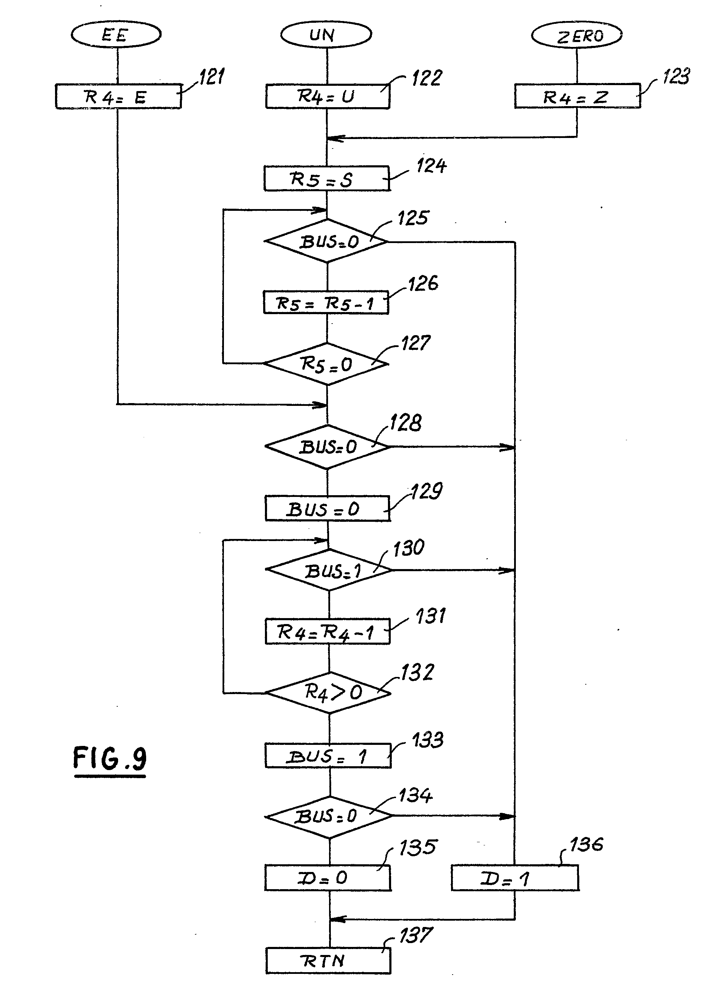

La Fig. 9 illustre le fonctionnement des procédures « envois étalon EE », « envoi du signal UN » et « envoi du signal ZERO ». A l'étape 121 un registre $R_4$ du microprocesseur est chargé avec la durée du signal étalon E. L'état de la ligne de transmision est contrôlé à l'étape 128. Si l'état de la ligne est 0 un défaut est constaté à l'étape 136. Par contre, si l'état de la ligne de transmission est au niveau 1, le microprocesseur place l'état de la ligne de transmission à l'état 0 (étape 129). Pendant les étapes 130 à 132 le registre $R_4$ est diminué d'une unité au rythme de l'horloge. Lorsque son contenu devient vide correspondant ainsi à la fin de la période étalon, le microprocesseur place l'état de la ligne de transmission à l'état 1 (étape 133). Un contrôle de l'état de la ligne de transmission est effectué à l'étape 134 pour déclarer un défaut à l'étape 136 dans la mesure où la ligne de transmission n'aurait pas pris la valeur 1 commandée à l'étape 133, ou l'absence de défaut à l'étape 135 dans la mesure où cette commande s'est bien effectuée. Les séquences 128 à 137 sont reprises intégralement par les microprogrammes d'exécution des procédures « UN » et « ZERO ». Avant l'exécution de ces étapes le microprocesseur 21 commande la ligne de transmission dans l'état 1 pendant une durée « s » pour les procédures « UN » et « ZERO », cette commande étant effectuée par l'exécution des étapes 124 à 127 où un registre $R_5$ est chargé avec la durée « s » du séparateur à l'étape 124, puis cette valeur est diminuée d'une unité à chaque boucle effectuée par les étapes 125 et 127 et l'on vérifie pendant ces étapes que l'état de la ligne de transmission reste à l'état 1.

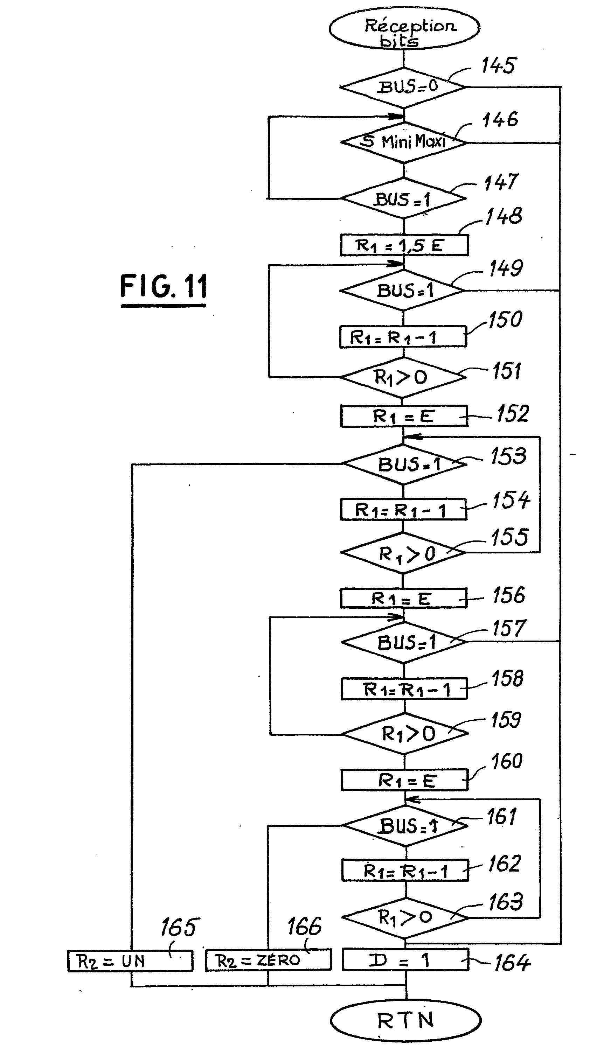

Le principe de fonctionnement d'un récepteur est montré par les organigrammes des Fig. 10 et 11. Le récepteur est à l'écoute de la ligne. Lorsque celle-ci passe à l'état 0 il exécute la procédure « mesure du signal étalon » représentée en Fig. 10. A la suite de cette procédure, la durée de chaque bit du message est analysée par la procédure « réception bit » représentée en Fig. 11. Comme il a été dit précédemment, le message comporte une partie code et une partie consigne. Par exemple, si le message comporte 8 bits, les 7 premiers représenteront le code et l'état du dernier bit la consigne (par exemple : 0 = arrêter, 1 = mettre en action). Le récepteur analyse si le code correspond à une des fonctions qui lui sont attribuées puis exécute l'ordre correspondant en mettant en accord l'état de sa sortie P2n correspondante puis après avoir testé les entrée/sorties P1n et P2n correspondant à l'ordre reçu il élabore un signal de réponse qu'il émet pendant la période attente-réponse pendant laquelle l'émetteur lui réserve la ligne, ceci en utilisant une procédure d'émission semblabe à celle qui a été décrite ci-dessus.

La mesure du signal étalon est effectuée au cours des étapes 138, 139 et 140 de la Figure 10. Lorsque le récepteur détecte un passage de la ligne de transmission de 1 à 0 après que cette ligne ait été pendant un certain temps dans l'état « attente », le contenu d'un registre $R_1$ du microprocesseur est augmenté d'une unité à partir de la valeur zéro à chaque exécution par le microprocesseur de la boucle représentée par les étapes 138, 139 et 140 pendant tout le temps où la ligne reste à l'état zéro. Le signal étalon est ainsi mesuré en un nombre de boucles, chaque boucle contenant comme précédemment un nombre fini de cycles d'horloge du microprocesseur. Lorsque la ligne de transmission quitte l'état zéro pour repasser dans l'état 1, un contrôle est effectué aux étapes 141 et 142 pour vérifier que le signal étalon E reçu est dans les tolérances permises. S'il est dans les tolérances l'état du registre $R_1$ est recopié dans un emplacement de la mémoire vive du microprocesseur (étape 143).

Si le signal E mesuré est en dehors des tolérances autorisées, le microprocesseur considère que le signal reçu est défectueux (étape 144) et la prise en compte du message est annulée. Le microprocesseur appelle ensuite la procédure de « réception bits » dont l'exécution, représentée à la Figure 11, s'effectue de la façon suivante. A l'étape 145 l'état de la ligne de transmission est testé. S'il est à 0 le microprocesseur exécute l'étape 164 en chargeant le registre de défaut D à 1, puis reprend l'écoute de la ligne. Si l'état de la ligne est à 1, un test sur la durée du signal séparateur est effectué à l'étape 146. Si la durée du signal séparateur est trop longue le microprocesseur exécute comme précédemment l'étape 164. Si la durée du signal séparateur est correcte, le microprocesseur exécute alors les étapes 148 à 151. A l'étape 148 le registre $R_1$ du microprocesseur est chargé à une valeur correspondante à 1,5 fois la durée du signal E mesurée précédemment.

Puis le contenu de ce registre est diminué d'une unité à l'étape 150 à chaque boucle exécutée par le microprocesseur et figurée par les étapes 149 à 151. A la fin du décompte lorsque le contenu du registre $R_1$ est nul, ce registre est à nouveau chargé à une valeur correspondant à 1 fois la durée du signal E mesurée précédemment. Le contenu de ce registre est à nouveau diminué d'une unité à l'étape 154 à chaque boucle exécutée par le microprocesseur et figurée par les étapes 153 à 155. Si pendant le décomptage l'état de la ligne de transmission prend la valeur 1 (étape 153), le bit du message détecté est considéré comme ayant la valeur 1 par le microprocesseur, qui inscrit alors un 1 dans un registre $R_2$ (étape 165). Si, par contre, à l'issue du décomptage précédent la ligne de transmission n'a pas changé d'état, le registre $R_1$ est à nouveau chargé à l'étape 156 à une valeur égale à 1 fois la valeur du signal E mesurée précédemment puis son contenu est à nouveau diminué jusqu'à la valeur 0 par exécution des étapes 157 à 159. Si pendant cette séquence l'état de la ligne de transmission vient à changer, cette transition est interprétée à l'étape 154 comme étant une erreur de transmission par le microprocesseur, qui charge son registre D à la valeur 1, à l'étape 164, pour retourner ensuite à l'écoute de la ligne de transmission. Si aucune erreur n'a été détectée pendant le déroulement des étapes 157 à 159, le registre $R_1$ du microprocesseur est à nouveau chargé à l'étape 160 à une fois la valeur du signal E. Le contenu de ce registre est à nouveau diminué aux étapes 161 à 163. Si pendant ce décomptage l'état de la ligne de transmission prend la valeur zéro, le bit du message détecté est considéré avoir la valeur 0 par le microprocesseur qui inscrit alors un 0 dans le registre $R_2$ à l'étape 166. Si, par contre, à l'issue du décomptage précédent l'état de la ligne de transmission n'a pas changé, le microprocesseur considère qu'il y a une erreur de transmission, il charge à l'étape 164 son registre D à la valeur 1 puis retourne à l'écoute de la ligne de transmission.

Il découle de l'organigramme de la Figure 11 que le décodage de la suite des uns et des zéros du message reçu par le récepteur s'effectue par un test de la ligne de transmission durant des intervalles de temps bien précis qui autorisent toutefois des fluctuations de l'horloge pendant la transmission. Il résulte en effet de l'organigramme de la Figure 11 qu'un état 1 du message ne peut être détecté que si la ligne change d'état dans l'intervalle 1,5. E à 2,5. E (étapes 148 à 155) et qu'un état 0 du message ne peut être détecté que si la ligne change d'état dans l'intervalle 3,5. E à 4,5. E. (étapes 156 à 162).

Dans le cas où un module gère à la fois des entrées de boutons de commandes et des sorties d'organes à commander on intercalera, bien entendu, des tests d'écoute de la ligne et des tests de contrôle de l'état des entrées. On pourra également prévoir le cas où ce module aura un message à émettre et un message à recevoir. Dans ce cas, si pendant la période A d'attente-émission la ligne revient à zéro, ce module passera sur la procédure « réception-message » après l'étape 102 (Fig. 7). Si le désistement a lieu pendant son émission il se remettra à l'écoute de la ligne pour capter le message répété par l'émetteur.

**Revendications**

1. Procédé de transmission de messages sous forme codée binaire, en mode série asynchrone, entre au moins un module émetteur-récepteur et des modules émetteurs et/ou récepteurs autonomes qui sont reliés entre eux par une seule ligne de transmission, la représentation de la suite des chiffres binaires 0 ou 1 des messages se faisant par application sur la ligne de transmission d'une suite de signaux Z et U correspondant chacun respectivement à un chiffre binaire 0 ou 1 du message transmis, chaque signal Z ou U ayant une durée déterminée fonction du chiffre 0 ou 1 transmis, la reconnaissance par le récepteur de la suite 0 ou 1 du message transmis étant réalisée par mesure de la durée des signaux reçus Z ou U à l'aide de la durée d'un signal étalon E transmis en même temps que le message par l'émetteur, caractérisé en ce que lesdits modules possèdent tous des horloges et des dispositifs de synchronisation internes indépendants et en ce que le décodage du message reçu par le récepteur s'effectue par celui-ci par division de la durée de chaque signal reçu (Z, U) par la durée du signal étalon reçu, mesurées chacune en fonction du temps de cycle de l'horloge interne dudit récepteur.

2. Procédé suivant la revendication 1, caractérisé en ce que les durées du signal étalon E et des signaux Z ou U correspondant au codage du message reçu par un récepteur sont mesurées par celui-ci en fonction du temps de cycle de l'horloge interne qui lui est propre.

3. Procédé selon l'une quelconque des revendications 1 et 2, caractérisé en ce que le signal étalon (E) est transmis par l'émetteur en tête du message.

4. Procédé selon l'une quelconque des revendications précédentes, caractérisé en ce que chaque émetteur, lorsqu'il a un message à émettre, initialise la ligne de transmission dans un premier état et, si la ligne est restée dans ce premier état pendant une durée prédéterminée A définissant un signal dit d'attente-émission, met la ligne de transmission dans un deuxième état pendant un nombre étalon de cycles de sa propre horloge définissant un signal étalon E de nombre de cycles identique pour tous les émetteurs, puis envoie un message constitué d'une série de signaux Z ou U par mise de la ligne de transmission dans le deuxième état pendant les durées correspondant respectivement à des nombres de cycles q × E ou p × E, q et p étant identiques pour tous les émetteurs, les signaux E, Z et U étant séparés par un signal séparateur S de durée prédéterminée pendant lequel l'émetteur remet la ligne dans le premier état.

5. Procédé selon la revendication 4, caractérisé en ce que, à la fin de l'émission d'un message, le module émetteur met la ligne de transmission dans le premier état pendant une durée R correspondant à un signal dit d'attente-réponse, le module récepteur du message délivre un message réponse, fonction de la bonne réception et/ou de la bonne exécution du message, constitué de signaux Z ou U avant la fin de la période de temps caractérisant la durée du signal d'attente-réponse, les durées des signaux d'attente-émission A, d'attente-réponse R et de séparateur S étant définis de façon que la durée du signal A soit plus grande que la durée du signal R et que celle du signal R soit plus grande ou égale à celle du signal séparateur.

6. Procédé selon l'une quelconque des revendications 4 ou 5, caractérisé en ce que chaque émetteur effectue des tests de l'état de la ligne de transmission en fonction du rythme de sa propre horloge et en ce que, s'il détecte lors de l'un de ces tests un deuxième état de la ligne alors qu'il a commandé un premier état ou l'inverse, il interrompt son signal d'attente-émission ou la transmission de son message et se met en attente de la disponibilité de la ligne.

7. Procédé selon la revendication 6, caractérisé en ce que la durée du signal d'attente-émission d'un émetteur est diminuée lorsque l'émission d'un message par cet émetteur vient d'être interrompue par l'émission d'un autre module.

8. Procédé selon l'une quelconque des revendications 4 à 7, caractérisé en ce que le premier état correspond à une mise sous tension de la ligne de transmission et le deuxième état à une mise en court-circuit de cette ligne.

## Claims

1. A process for transmitting messages in the binary code form, in asynchronous series mode, between at least a transmitter-receiver module and automonous transmiter and/or receiver modules which are interconnected by a single transmission line, the representation of the sequence of the binary digits 0 or 1 of the messages being obtained by application to the transmission line of a sequence of Z und U signals each respectively corresponding to a binary digit 0 or 1 of the transmitted message, each Z or U signal having a predetermined duration which is a function of the transmitted digit 0 or 1, the recognition by the receiver of the 0 or 1 sequence of the transmitted message being achieved by measurement of the duration of the Z or U signals received by means of the duration of a standard signal E transmitted at the same time as the message by the transmitter, characterised in that said modules all comprise clocks and independent internal synchronization devices and the decoding of the message received by the receiver is effected by the latter by division of the duration of each received signal (Z, U) by the duration of the received standard signal, each of which is measured as a function of the cycle time of the internal clock of said receiver.

2. A process according to claim 1, characterized in that the durations of the standard signal E and the Z or U signals corresponding to the code of the message received by the receiver are measured by the latter as a function of the cycle time of the internal clock pertaining thereto.

3. A process according to claim 1 or 2, characterised in that the standard signal (E) is transmitted by the transmitter at the beginning of the message.

4. A process according to any one of the preceding claims, characterised in that each transmitter, when it has a message to transmit, initializes the transmission line in a first state and, if the line has remained in this first state for a predetermined duration A defining a wait-transmission signal, puts the transmission line into a second state for a standard number of cycles of its own clock defining a standard signal E of an identical number of cycles for all the transmitters, then sends a message constituted by a series of Z or U signals by putting the transmission line into the second state for durations respectively corresponding to numbers of cycles q × E or p × E, q and p being identical for all the transmitters, the E, Z and U signals being separated by a separator signal S of predetermined duration during which the transmitter puts the line back into the first state.

5. A process according to claim 4, characterised in that at the end of the transmision of a message, the transmitter module puts the transmission line into the first state for a duration R corresponding to a wait-response signal, the receiver module receiving the message delivers a response message which is a function of the good reception and/or of the good execution of the message, constituted by Z or U signals before the end of the period of time characterising the duration of the wait-response signal, the durations of the wait-transmission signal A, the wait-response signal R, and the separator signal S being defined in such manner that the duration of the signal A is greater than the duration of the signal R and the duration of the signal R is greater than or equal to the duration of the separator signal.

6. A process according to claim 4 or 5, characterised in that each transmitter effects tests of the state of the transmission line as a function of the rhythm of its own clock and, if it detects in the course of one of these tests a second state of the line whereas it has ordered a first state or vice versa, it interrupts its wait-transmission signal or the transmission of its message and waits for the availability of the line.

7. A process according to claim 6, characterised in that the duration of the wait-transmission signal of a transmitter is decreased when the transmission of a message by this transmitter has just been interrupted by the transmission of another module.

8. A process according to any one of the preceding claims 4 to 7, characterised in that the first state corresponds to the connection of voltage to the transmission line and the second state corresponds to a shorting of this line.

## Ansprüche

1. Verfahren zum Übertragen von Binär-Informationen in asynchronischer Folge zwischen mindestens einem Sender-Empfänger-Modul und autonomen Sender- und/oder Empfänger-Modulen, die miteinander über eine einzige Übertragungsleitung verbunden sind, wobei die Folge der Informations-Binärzahlen 0 oder 1 durch Einleiten einer Folge von Signalen Z und U in die Übertragungsleitung realisiert wird, von denen jedes einer zu übertragenden Binärzahl 0 oder 1 entspricht und eine Dauer hat, die eine Funktion der Binärzahl 0 oder 1 ist, und die Erkennung der Folge der Binärzahlen 0 oder 1 in dem Empfänger durch Messen der Dauer der Signale Z oder U mit Hilfe der Dauer eines Normalsignals E erfolgt, das zur selben Zeit wie die Informationen vom Sender übertragen wird, dadurch gekennzeichnet, daß alle Module eingebaute und voneinander unabhängige Zeitgeber und Synchronisationsvorrichtungen besitzen und daß die Decodierung der Information in einem Empfänger durch Division der Dauer jedes erhaltenen Signals (Z, U) durch die Dauer des erhaltenen Zeitgeber-Signals erfolgt, wobei alle Meßsignale in Abhängigkeit des Zyklus-Taktes des eingebauten Zeitgebers des Empfängers gemessen werden.

2. Verfahren nach Anspruch 1, dadurch gekennzeichnet, daß die Dauer der Zeitgebersignale E und der Signale Z oder U, die der Codierung der in einem Empfänger erhaltenen Information entsprechen, von dem Empfänger in Abhängigkeit des Zyklus-Taktes des eingebauten Zeitgebers gemessen werden, der ihm eigen ist.

3. Verfahren nach einem der Ansprüche 1 und 2, dadurch gekennzeichnet, daß das Zeitgebersignal (E) vom Sender zu Beginn der Infirmation abgegeben wird.

4. Verfahren nach einem der vorstehenden Ansprüche, dadurch gekennzeichnet, daß jeder Sender, wenn er eine Information abzugeben hat, die Übertragungsleitung in einen ersten Zustand bringt, daß, nachdem die Leitung in dem ersten Zustand während einer vorgegebenen Dauer A war, was ein sogenanntes Achtungs-Sende-Signal definiert, diese Leitung in einen zweiten Zustand für eine Normalzahl von Zyklen ihres eigenen Zeitgebers gelangt, die ein Normalsignal E aus der Zahl der Zyklen definiert, die für alle Sender identisch sind, daß darauf eine Information, bestehend aus einer Reihe von Signalen Z oder U ausgesendet wird, indem die Übertragungsleitung in dem zweiten Zustand während der Dauer ist, die der Zahl der Zyklen q × E oder p × E entspricht, wobei q und p für alle Sender identisch sind und die Signale E, Z und U durch ein Trennungssignal S vorbestimmter Dauer voneinander getrennt sind, innerhalb dessen der Sender die Leitung in den ersten Zustand bringt.

5. Verfahren nach Anspruch 4, dadurch gekennzeichnet, daß am Ende der Aussendung einer Information der Sender-Modul die übertragungsleitung in den ersten Zustand für eine Dauer R bringt, was einem sogenannten Achtungs-Antwort-Signal entspricht, daß der die Information empfangende Empfänger-Modul als Folge des einwandfreien Empfanges und/oder der einwandfreien Ausführung der Information eine Antwort-Information abgibt, die aus den Signalen Z oder U vor dem Ende der Zeitdauer gebildet wird, die die Dauer des Achtungs-Antwort-Signals charakterisiert, wobei die Dauer der Achtungs-Sende-Signale A, der Achtungs-Antwort-Signale R und der Signals A größer als die Dauer des Signals R und die Dauer des Signals R größer als die Dauer oder gleich der Dauer des Trennungssignals ist.

6. Verfahren nach Anspruch 4 oder 5, dadurch gekennzeichnet, daß jeder Sender den Zustand der Übertragungsleitung im Rhythmus seines eigenen Zeitgebers testet und daß, wenn er während eines dieser Tests einen zweiten Zustand der Leitung feststellt, wenn er einen ersten Zustand bewirkt hat oder umgekehrt, er sein Achtungs-Sende-Signal oder die Übertragung seiner Information unterbricht und die Verfügbarkeit der Leitung abwartet.

7. Verfahren nach Anspruch 6, dadurch gekennzeichnet, daß die Dauer des Achtungs-Sende-Signals eines Senders verringert wird, wenn die Aussendung einer Information von diesem Sender durch die Aussendung von einem anderen Modul unterbrochen wird.

8. Verfahren nach einem der Ansprüche 4 bis 7, dadurch gekennzeichnet, daß der erste Zustand einer Spannungsbeaufschlagung der Übertragungsleitung und der zweite Zustand einer Kurzschließung der Leitung entspricht.

FIG. 1

FIG.2

FIG. 3

1

**FIG.4**

FIG. 5

FIG. 10

**FIG. 6**

4

**FIG. 7**

Message

$R_1 = A$ — 100

$BUS = 1$ — 101

$BUS = 0$ — 102

$R_1 = A - 1$ — 103

$R_1 > 0$ — 104

$BUS = 0$ — 105

$D = 1$ — 106

$D = 1$ — 107

$EM$ — 108

$D = 1$ — 109

$AR$ — 110

**FIG. 8**

EM

$R_2 = ME$ — 111

$EE$ — 112

$BUS = 0$ — 113

$I = 7$ — 114

$R_2(I) = 0$ — 115

$UN$ — 116

$ZERO$ — 117

$BUS = 0$ — 118

$I = I - 1$ — 119

$I > 0$ — 120

$D = 1$ — 121

109

FIG.9

## FIG. 11

Réception bits

BUS = 0 — *145*

S Mini Maxi — *146*

BUS = 1 — *147*

$R_1 = 1,5 E$ — *148*

BUS = 1 — *149*

$R_1 = R_1 - 1$ — *150*

$R_1 > 0$ — *151*

$R_1 = E$ — *152*

BUS = 1 — *153*

$R_1 = R_1 - 1$ — *154*

$R_1 > 0$ — *155*

$R_1 = E$ — *156*

BUS = 1 — *157*

$R_1 = R_1 - 1$ — *158*

$R_1 > 0$ — *159*

$R_1 = E$ — *160*

BUS = 1 — *161*

$R_1 = R_1 - 1$ — *162*

$R_1 > 0$ — *163*

*165* — $R_2 = UN$

*166* — $R_2 = ZERO$

$D = 1$ — *164*

RTN

7